# EUROPEAN PATENT APPLICATION

(11) **EP 1 362 719 A1**
(43) Date of publication of application: **19.11.2003**
(21) Application number: 02014106.5
(22) Date of filing: 24.06.2002
(51) Int. Cl.: B60G 13/00, F16F 13/10, F16F 9/54

(54) **Hydraulic strut mounting assembly**

(30) Priority: 15.05.2002 KR 2002026830
(71) Applicant: KIA MOTORS CORPORATION, Seoul 137-938 (KR)
(72) Inventor: Jung, Si-Seob, Suwon-shi, Kyonggi-do 440-709 (KR)
(74) Representative: Viering, Jentschura & Partner

(57) **Abstract**

Disclosed is a hydraulic strut mounting assembly including a plurality of chambers formed within a strut mount (100), in which the chambers (112,113) are communicated with each other and are filled with hydraulic fluid for supplying a hydraulic pressure, thereby reinforcing capability of a shock absorber (20) and a coil spring and thus further improving a ride quality of a vehicle. The hydraulic strut mounting assembly comprises a strut mount (100) coupled to a shock absorber (20), a decoupler (111) provided across an interior space of the strut mount, an upper and lower chamber formed in the strut mount by the decoupler, an orifice (114) communicating the upper chamber (112) with the lower chamber (113), a fluid filled within the lower chamber, and a plunger (120) for pressurizing the fluid in line with the shock absorber when a vibration is generated.

## Description

### BACKGROUND OF THE INVENTION

### Field of the Invention

The present invention relates to a strut mounting assembly for a suspension, and more particularly, to a hydraulic strut mounting assembly including a plurality of chambers formed in a strut mount, in which the chambers are communicated with each other and are filled with hydraulic fluid for supplying a hydraulic pressure, thereby reinforcing capability of a shock absorber and a coil spring and thus further improving a ride quality of a vehicle.

### Background of the Prior Art

A suspension is to connect a wheel axle with a vehicle body, so that the vibration or impact applied to the wheel axle from a road surface is absorbed by the suspension to prevent it from being directly transferred to the vehicle body, thereby protecting the vehicle body or freight and improving a ride quality. Such a suspension includes a coil spring for damping the impact shocked from the road surface, and a shock absorber for suppressing a free vibration of the coil spring as soon as possible to improve the ride quality.

In general, the suspension for the vehicle is classified into a front suspension and a rear suspension depending upon a mounting location of the suspension. The front suspension supports the weight of the vehicle by connecting the vehicle frame with the vehicle axle, as well as absorbing the vibration transferred from the wheel.

The most common form of the front suspension is a strut-type or Mcpherson-type suspension where a shock absorber is mounted onto a strut. An upper end of the strut is fixed to a strut mount, while a lower end is connected to a steering knuckle.

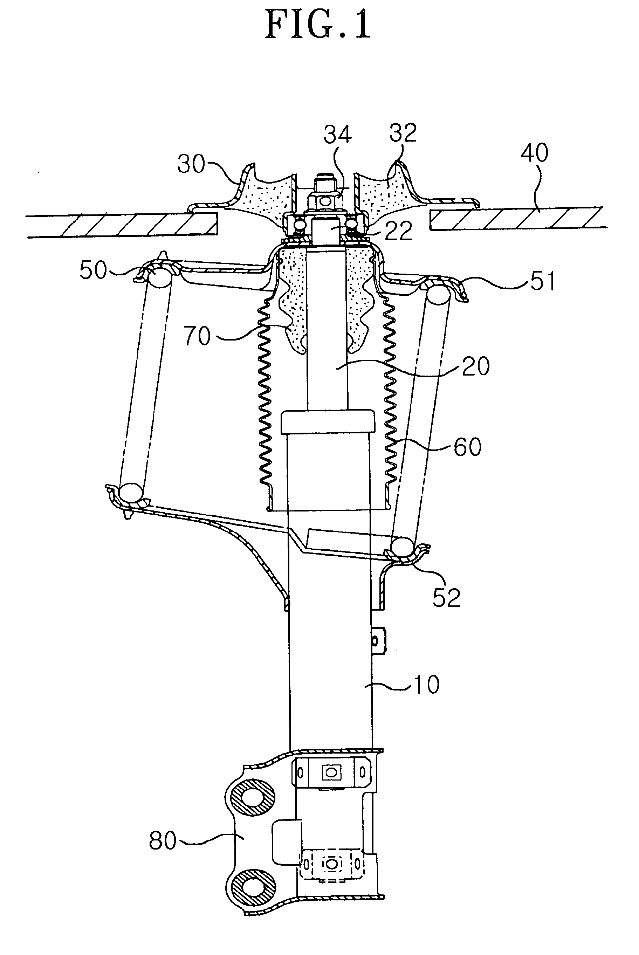

According to the conventional strut mount assembly, as shown in Fig. 1, a shock absorber 20 is connected to the upper portion of a strut 10, and a strut mount 30, to which the upper end of the shock absorber 20 is fastened by a nut 34, is fixed to a vehicle body's frame 40. The lower portion of the strut 10 is secured to a steering knuckle 80. The strut and the shock absorber 20 are provided on their surroundings with an upper spring seat 51 and a lower spring seat 52, respectively, and a coil spring 50 is installed thereon. A dust cover 60 is installed within the coil spring 50 to prevent the alien substances from infiltrating between the strut 10 and the shock absorber.

The strut mount assembly also includes a damping member 70 of rubber material, positioned within the dust cover 60 and around the shock absorber 20, for reinforcing the damping function of the shock absorber 20, and absorbing the impact or vibration applied to the suspension 1. The strut mount 30 is filled with damping means 32 of rubber material for absorbing or isolating the remained impact or vibration that is not removed by the shock absorber 20.

With the construction of the conventional strut mount assembly, upon collision or rebound, the vibration transferred from the steering knuckle 80 is primarily absorbed by the coil spring 50. Then, the vibration conveyed through the coil spring 50 is transferred to the shock absorber 20, so that a piston rod 22 is reciprocally moved up and down. At that time, the vibration is absorbed by the damping means 32 provided in the strut mount 30, and is dispersed to the vehicle frame 40.

According to the construction of the above conventional strut mount assembly, there is a problem in that since the strong vibration having an intensity of above a proper level transferred from the steering knuckle is absorbed using only the damping member or means of mere rubber material, the damping function is considerably weak, thereby lowering the ride quality.

### SUMMARY OF THE INVENTION

Accordingly, the present invention is directed to a hydraulic strut mounting assembly that substantially obviates one or more problems due to limitations and disadvantages of the related art.

It is an object of the present invention to provide a hydraulic strut mounting assembly including a plurality of chambers within a strut mount, in which the chambers are communicated with each other and are filled with hydraulic fluid for supplying a hydraulic pressure, thereby reinforcing capability of a shock absorber and a coil spring and thus further improving a ride quality of a vehicle.

In order to accomplish the above objects, the present invention provides a hydraulic strut mounting assembly comprising: a strut mount coupled to a shock absorber; a decoupler provided across an interior space of the strut mount; an upper and lower chamber formed in the strut mount by the decoupler; an orifice communicating the upper chamber with the lower chamber; a fluid filled within the lower chamber; and a plunger for pressurizing the fluid in line with the shock absorber when a vibration is generated.

The strut mount includes a bracket detachably coupled to an upper portion thereof for isolating an interior of the strut mount form the exterior, and a mounting rubber provided in a lower portion thereof for absorbing and dispersing a vibration of the shock absorber. Preferably, the strut mount is hermetically sealed by the bracket and mounting rubber.

The plunger is coupled to the shock absorber via desired fastening means of a female threaded structure or press-fitted structure, and the plunger is positioned in the lower chamber.

The fluid has a desired viscosity. The fluid flows from the lower chamber to the upper chamber by the plunger, if the vibration exceeding an amplitude range of ± 1.0 mm happens.

It is to be understood that both the foregoing general description and the following detailed description of the present invention are exemplary and explanatory and are intended to provide further explanation of the present invention as claimed.

### BRIEF DESCRIPTION OF THE DRAWINGS

The accompanying drawings, which are included to provide a further understanding of the present invention and are incorporated in and constitute a part of this application, illustrate embodiment(s) of the present invention and together with the description serve to explain the principle of the present invention. In the drawings:

Fig. 1 is a cross sectional view illustrating the construction of a conventional strut mount assembly;

Fig. 2 is a cross sectional view illustrating the construction of a hydraulic strut mount assembly according to a preferred embodiment of the preset invention; and

Fig. 3 is a cross sectional view illustrating the operating state of the hydraulic strut mount assembly in Fig. 2.

### DETAILED DESCRIPTION OF THE PREFERRED EMBODIMENTS

Reference will now be made in detail to a preferred embodiment of the present invention, an example of which is illustrated in the accompanying drawings.

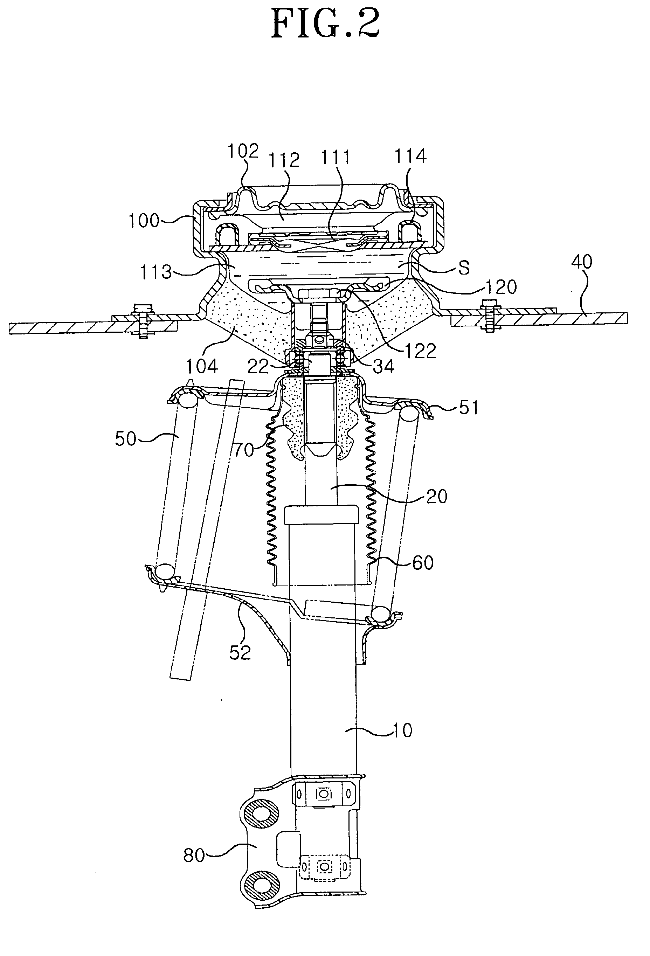

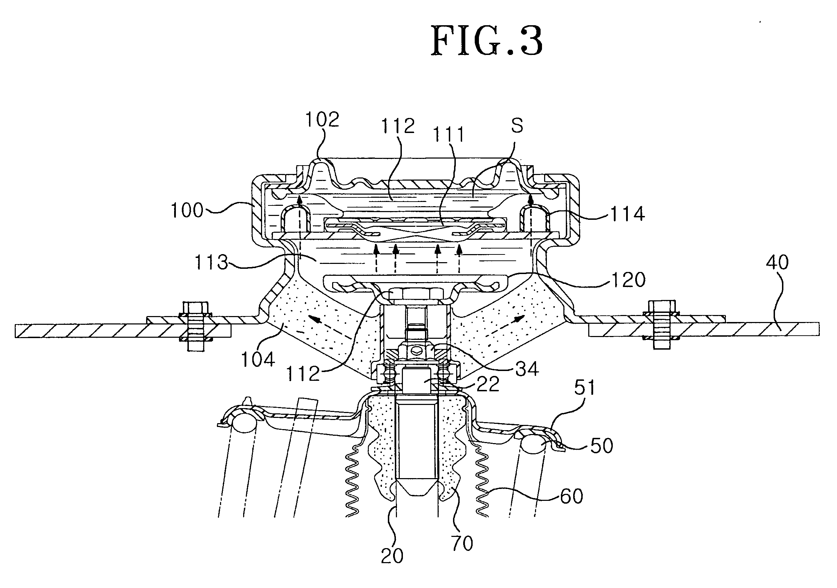

A preferred embodiment of present invention is illustrated in Figs 2 and 3, in which Fig. 2 is a cross sectional view illustrating the construction of a hydraulic strut mount assembly according to a preferred embodiment of the preset invention, and Fig. 3 is a cross sectional view illustrating the operating state of the hydraulic strut mount assembly in Fig. 2. The reference numerals designating corresponding parts in the present invention are the same as those in Fig. 1 showing the conventional strut mount assembly, and the description of the corresponding parts will be omitted for the clarity.

The hydraulic strut mount assembly of the present invention includes, as shown in Fig. 2, a strut mount 100 positioned on an upper portion of a shock absorber 20 built in a strut 10. A surrounding of the strut mount 100 is fixed to a vehicle frame 40, and a bracket 102 is coupled to an inner upper end of the strut mount 100 to hermetically seal the strut mount. The strut mount 100 is provided in an inner lower end thereof with a resilient mounting rubber 104.

A desired chamber is formed on the mounting rubber 104 in the strut mount 100, and is divided into an upper chamber 112 and a lower chamber 113 by a decoupler 111 of a plate structure. The lower chamber 113 is filled with a fluid S therein. The decoupler 111 is formed with an orifice 114 penetrating the decoupler, in order to guide the fluid S in the lower chamber 113 to the upper chamber 112.

Preferably, the fluid comprises water, oil having a desired viscosity and so forth.

The strut mount assembly of the present invention also includes a plunger 120 located on the upper end of a piston rod 22 of the shock absorber 20 coupled to the strut mount 100, the piston rod penetrating an upper spring sheet 51. The plunger 120 is coupled to the piston rod 22 via a desired fastening member 122, and is positioned within the lower chamber 113. A bolt of a female threaded structure or press-fitted structure may be used as the fastening member 122.

With the construction of the hydraulic strut mount assembly of the present invention as described above, upon collision or rebound, the vibration conveyed through the coil spring 50 is transferred to the shock absorber 20, so that the piston rod 22 is reciprocally moved up and down. At that time, a portion of the vibration is absorbed by the shock absorber 20, and simultaneously, is dispersed to the vehicle frame 40 with deformation of the mounting rubber 104 provided on the inner lower end of the strut mount 100, as shown in Fig. 3.

At up and down reciprocation of the piston rod 22, the plunger 120 fixed to the end of the piston rod is moved up and down in line with the operation of the piston rod, so that the plunger 120 pressurizes upward the fluids within the lower chamber 113. The fluid S pressurized by the plunger 120 flows into the upper chamber 112 through the orifice 114. In the process, the vibration is absorbed by the hydraulic pressure.

According to the hydraulic strut mount assembly of the present invention, flow of the fluid may be occurred when amplitude of the vibration transferred from the steering knuckle 80 is above a predetermined level. At that time, kinetic energy of the fluid S is converted to heat energy, thereby carrying out the vibration damping function.

As an alternative of the present invention, if the vibration happens at an amplitude below a predetermined level, preferably, in a range of ± 0.5 to ± 1.0 mm, the pumping action of the mounting rubber 104 is not significant, and amplitude of the plunger 120 is minute. Therefore, the minute vibration is occurred in the decoupler 111, but the fluid S does not flow from the lower chamber 113 to the upper chamber 112.

In addition, if weak vibration is transferred from the steering knuckle 80, the plunger 120 restricts the flow of the fluid S to generate eddy in the fluid S, thereby achieving the proper high frequency damping function.

If the high frequency vibration exceeding an amplitude range of ± 1.0 mm happens, the plunger 120 is reciprocally moved up and down, so that the fluid S flows from the lower chamber 113 through the orifice 114 to the upper chamber 112. The vibration damping effect relative to the vehicle body may be maximized by the hydraulic pressure generated at the above process.

With the above construction of the hydraulic strut mount assembly of the present invention, a plurality of chambers are formed within the strut mount, in which the chambers are communicated with each other and are filled with the hydraulic fluid for supplying a hydraulic pressure to one side of the chamber. The hydraulic pressure generated upon happening the strong vibration above a predetermined level reinforces the damping capability of the shock absorber and coil spring, thereby improving the ride quality of the vehicle.

The forgoing embodiment is merely exemplary and is not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A hydraulic strut mounting assembly comprising:
a strut mount coupled to a shock absorber;
a decoupler provided across an interior space of the strut mount;
an upper and lower chamber formed in the strut mount by the decoupler;
an orifice communicating the upper chamber with the lower chamber;
a fluid filled within the lower chamber; and
a plunger for pressurizing the fluid in line with the shock absorber when a vibration is generated.

2. The hydraulic strut mounting assembly as claimed in claim 1, wherein the strut mount includes a bracket detachably coupled to an upper portion thereof for isolating an interior of the strut mount form the exterior, and a mounting rubber provided in a lower portion thereof for absorbing and dispersing a vibration of the shock absorber, and the strut mount is hermetically sealed by the bracket and mounting rubber.

3. The hydraulic strut mounting assembly as claimed in claim 1, wherein the plunger is coupled to the shock absorber via desired fastening means of a female threaded structure or press-fitted structure.

4. The hydraulic strut mounting assembly as claimed in claim 1, wherein the plunger is positioned in the lower chamber.

5. The hydraulic strut mounting assembly as claimed in claim 1, wherein the fluid has a desired viscosity.

6. The hydraulic strut mounting assembly as claimed in claim 1, wherein the fluid flows from the lower chamber to the upper chamber by the plunger, if the vibration exceeding an amplitude range of ± 1.0 mm happens.
